# EUROPÄISCHE PATENTSCHRIFT

(11) **EP 3 061 552 B1**
(45) Veröffentlichungstag und Bekanntmachung des Hinweises auf die Patenterteilung: **13.03.2019**
(21) Anmeldenummer: 15202870.0
(22) Anmeldetag: 29.12.2015
(51) Int. Cl.: B23D 45/10, B23D 47/12, A01G 3/08, A01G 23/095

(54) **SAEGEVORRICHTUNG**
SAWING DEVICE
DISPOSITIF DE SCIE

(30) Priorität: 26.02.2015 DE 102015002324
(43) Veröffentlichungstag der Anmeldung: 31.08.2016
(73) Patentinhaber: Folger, Wolfgang, 68766 Hockenheim (DE)
(72) Erfinder: Folger, Wolfgang, 68766 Hockenheim (DE)
(74) Vertreter: Zellentin & Partner mbB Patentanwälte

(56) Entgegenhaltungen:
- EP-A2- 1 250 973
- CN-B- 103 004 488
- DE-A1- 4 240 866
- US-A- 1 988 243
- US-A- 4 302 922
- US-A- 4 554 781
- US-A1- 2014 102 737

## Beschreibung

Die vorliegende Erfindung betrifft ein Verfahren zum Freischneiden und eine Sägevorrichtung, die von einem Helikopter getragen wird und sich besonders zum Freischneiden von Freileitungen eignet. Aus dem Dokument US4554781 ist ein Verfahren gemäß dem Oberbegriff des Anspruchs 1 und eine solche Sägevorrichtung gemäß dem Oberbegriff des Anspruchs 7 bekannt.

Von Helikoptern getragene Sägevorrichtungen gehören seit längerem zum Stand der Technik. Die meisten Vorschläge betreffen eine Anordnung von mehreren Kreissägeblättern an einem langgestreckten Träger, siehe z.B. US 4,554,781 A, US 4,815,263 A, WO 2004/103063 A1 und DE 298 05 580 U1. Die Verwendung einer Kettensäge ist aus US 5,961,070 A bekannt. Außerdem wurden horizontal angeordnete Sägeblätter beschrieben, beispielsweise in DE 298 05 580 U1, US 6,394,156 B1 und EP 2 554 041 A1.
All diesen Sägevorrichtungen ist gemeinsam, dass sie vor allem zum Freischneiden von Freileitungen vorgesehen sind, d.h. zur Entfernung von Astwerk und von Baumwipfeln. Gegenüber terrestrischen Vorrichtungen haben sie den großen Vorteil, auch Astwerk und Baumwipfel in solchen Höhen problemlos zu erreichen, die vom Boden aus zu hoch sind. Außerdem kann der Helikopter unabhängig von der Geländebeschaffenheit operieren.
Ein großer Nachteil der bekannten Sägevorrichtungen ist die Anfälligkeit gegenüber einem Verklemmen von Astwerk. Der Antrieb der Sägeblätter erfolgt in der Praxis fast ausschließlich über einen Verbennungsmotor, welcher die Mehrzahl an Sägeblättern über Wellen und Getriebe oder über Riemen antreibt. In den o.g. Schriften vorgeschlagene alternative Antriebskonzepte wie Hydraulikmotoren, Druckluftmotoren oder Elektromotoren konnten sich in der Praxis nicht etablieren, würden aber auch die Problematik des Verklemmens nicht lösen.
Zur Vermeidung eines Verklemmens wird bei allen mit den Sägevorrichtungen für Helikopter vergleichbaren Sägen, also jeder Art von Kreissäge, große Sorgfalt darauf verwandt, das zu sägende Gut im optimalen Winkel, also parallel zur Drehachse des Sägeblatts zuzuführen, auf jeden Fall aber den Winkel, den ein zu durchtrennender Gegenstand im Moment des Einschnittes einnimmt während des gesamten Sägevorgangs beizubehalten. Gelingt das letztere nicht, kommt es zu der beim Sägen gefürchteten Klemmwirkung und einem damit einhergehenden plötzlichen Anstieg des Drehmoments, der sich dem gesamten Antriebsstrang mitteilt. Der Drehmomentanstieg kann so groß sein, dass die Säge stark beschädigt oder gar zerstört werden kann, wenn keine Schutzeinrichtung vorhanden ist, wie z.B. eine elektrische Sicherung, die auf die aus dem Drehmomentanstieg resultierenden Anstieg der Stromaufnahme durch Abschaltung reagiert. Bei elektrischen Antrieben können neben der Sicherung auch Einrichtungen zur Begrenzung der Stromaufnahme Verwendung finden. Bei von Verbrennungsmotoren angetriebenen Sägeblättern kommen mechanische Rutschkupplungen zur Anwendung, bei hydraulischen oder pneumatischen Antrieben würde man Druckbegrenzungsventile einsetzen.

Bei allen stationär am Boden verwendeten Sägesystemen gestaltet sich die Vermeidung von Verklemmungen erheblich einfacher als es beim Betrieb einer vom Helikopter getragenen Säge möglich ist. Selbst bei Sägen, bei denen die Zuführung rein manuell erfolgt, helfen die Nähe und die direkte Sicht auf das Geschehen, die fixe Position des Sägeblatts (oder des zu sägenden Gegenstandes bei z.B. einer Unterflurzugsäge), sowie der als Auflage dienende Sägetisch dabei, Verklemmungen zu vermeiden. Andere Sägen verfügen über Zuführungsschlitten oder z.B. eine Zuführungswippe (Wippkreissäge) um nur zwei Beispiele zu nennen, die eine sachgerechte Zuführung ermöglichen.

All diese günstigen Voraussetzungen gibt es bei einer am Lasthaken des Helikopters hängenden Sägevorrichtung nicht. Die abzutrennenden Äste und teilweise die ganzen Bäume bewegen sich im Rotorabwind. Dies bewirkt häufig Verklemmung. Die Säge ist über ein Torsionsrohr so mit der Helikopterzelle verbunden, dass die Sägeblätter stets parallel zur Helikopter Längsachse ausgerichtet sind, die Säge "schaut" sozusagen in die gleiche Richtung wie der Helikopter. Unbeabsichtigte Drehbewegungen des Helikopters um die Hochachse während des Sägevorgangs teilen sich über das Torsionsrohr der Säge mit und bewirken Verklemmung. Auch kann das Torsionsrohr nicht völlig torsionsfrei sein, so dass ständig kleine Drehungen um die vertikale Achse der Säge auftreten. Dies fördert ebenso Verklemmungen. Weiter kann auch das durch das Rotieren der Sägeblätter erzeugte Kreiselmoment zum Verklemmen führen. Die Sicht des Piloten auf die Säge ist durch sich bewegende Äste und die Entfernung (bis zu 40 m Aufhängungslänge) eher schlecht. Problematische Situationen werden oft nicht oder zu spät erkannt. So kommt es häufig vor, dass z.B. eine Rutschkupplung unbemerkt überhitzt und unbrauchbar wird. Die nicht vermeidbare und im Vergleich zu Sägeeinrichtungen am Boden große Neigung zum Verklemmen stellt das größte Problem bei den Helikoptersägen dar.

Der Antriebsstrang der Helikoptersägen, bestehe er aus Wellen mit 90° Getrieben oder aus Riementrieben kann den enormen Drehmomentanstieg verursacht durch eine heftige Verklemmung nicht verkraften. Einer kräftigeren Auslegung steht der limitierende Faktor Gewicht im Wege. Die oben beschriebenen Schutzeinrichtungen für die verschiedenen genannten bisherigen Antriebssysteme für Helikoptersägen wie Druckbegrenzungsventile, Begrenzung der Stromaufnahme, mechanische Rutschkupplungen müssen erfahrungsgemäß so eingestellt sein, das sie spätestens dann in Aktion treten, wenn das Drehmoment das Niveau erreicht, welches gerade noch vom Antriebsstrang verkraftet wird. Dies ist insbesondere mit den von Hand einzustellenden Rutschkupplungen sehr schwierig. Diese Kupplungen verglühen sehr rasch wenn sie im Falle einer vom Piloten nicht bemerkten Verklemmung zu lange durchrutschen oder zu weich eingestellt sind. Sind sie zu hart eingestellt, erfährt der Antriebsstrang zu viel Drehmoment. Die Einstellungen der Schutzeinrichtungen müssen wegen der entsprechenden Auslegung der Antriebsstränge erfahrungsgemäß so vorgenommen werden dass in der Folge eine maximale Leistungsaufnahme durch das Sägeblatt von in etwa 5 bis 6 PS ermöglicht wird.

Dadurch entsteht ein Teufelskreis der darin besteht, dass gerade dann, wenn eine der häufig vorkommenden und unvermeidlichen Verklemmungen auftritt, nicht genug Drehmoment zur Verfügung steht, um die Verklemmung zu überwinden. Wegen der beschriebenen Probleme muss die Arbeit häufig unterbrochen werden um Reparaturen und Neueinstellungen vorzunehmen. Nicht selten kommen nur 2 bis 3 Stunden an produktiver Sägearbeit pro Einsatztag zusammen.

Es ist festzustellen, dass beim Einsatz der vom Helikopter getragenen Sägevorrichtungen die größte Problematik in der häufigen Verklemmung besteht, aber der zu schwache Antriebsstrang das erforderliche Drehmoment zu deren Überwindung nicht übertragen kann. Diese Neigung zur Verklemmung findet ihren Grund vor allem außerhalb der Sägevorrichtung in der nicht zu beeinflussenden typischen Arbeitsumgebung, die durch schwankende Äste und Bäume und die schlechte Sicht des Piloten auf den Sägevorgang gekennzeichnet ist. Beim Sägesystem ist wie oben beschrieben das Torsionsrohr problematisch, sowie das auftretende Kreiselmoment (Gewicht und Massenverteilung der Sägeblätter sowie deren Drehzahl definieren das Kreiselmoment) als Faktoren, die die Neigung zum Verklemmen fördern.

Zur Lösung dieser Problematik schlägt die Erfindung vor, bei einer Sägevorrichtung mit mindestens zwei Kreissägeblättern jedem Sägeblatt einen eigenen Elektromotor als Antrieb zuzuordnen und die Elektromotoren über Regler mit einer Steuerung zu verbinden, welche die Drehzahl und das Drehmoment der Elektromotoren über die Regler steuert.

Bei der vorliegenden Vorrichtung handelt es sich um eine Säge die vertikal oder horizontal unter einem Helikopter hängend dazu verwendet wird z.B. Freileitungstrassen und Lichtraumprofile von Verkehrswegen freizuschneiden. Weiterhin besteht ein sich häufender Bedarf an Feld-Waldgrenzen überhängende Äste zu entfernen die das Befahren dieser Grenzen mit landwirtschaftlichen Geräten behindern. Gelegentlich sollen auch die Wipfel von Bäumen gekürzt werden, was mit horizontal laufenden Sägeblättern bewerkstelligt wird.

Bei der neuen Vorrichtung wird die Verwendung von Sägeblättern, angebracht an einem vertikalen oder horizontalen Träger, unter Verwendung eines Torsionsrohrs zwischen diesem Träger und der Helikopterzelle, wie bisher bekannt, beibehalten. Der Antrieb der Sägeblätter erfolgt jedoch durch je einen Elektromotor pro Sägeblatt unter Vermeidung eines Antriebsstrangs. Dieser war im Stand der Technik unvermeidlich, da ein Motor alle Sägeblätter anzutreiben hatte oder wenige Motoren Gruppen von Sägeblättern zugeordnet waren.

Vorzugsweise ermöglicht ein Speicher für elektrische Energie, wie Akkumulatoren oder Kondensatoren oder eine Kombination von beiden, als Puffer die Bereitstellung des im praktischen Betrieb seltenen und nur für kurze Zeiträume notwendigen Spitzenbedarfs. Die Zeiträume geringen Bedarfs werden durch permanente Einspeisung zur Ergänzung genutzt.

Auch die durch die Regelmöglichkeiten des Systems mögliche Rekuperation kann zur Auffüllung des Speichers genutzt werden. Rekuperation durch Abbremsung aller frei laufenden Sägeblätter zu Gunsten eines sich verklemmenden Sägeblattes ist eine weitere vorteilhafte Möglichkeit des neuen Systems.

Ein elektrisch angetriebener gegenläufiger Kreisel kann sowohl zur Kompensation der Kreiselwirkung des Systems als auch als zusätzlicher Schwungmassenspeicher verwendet werden.

Alternativ können die Sägeblätter gegenläufig angetrieben werden, wobei an den Stellen, wo zwei Sägeblätter mit gegenläufiger Drehrichtung über- bzw. nebeneinander angeordnet sind, auf der Rückseite Schutzbügel vorgesehen sind, die ein Einziehen von Astwerk verhindern. Rückseite meint die bei normaler Flugrichtung hinten liegende Seite der Sägevorrichtung.

Die Sägevorrichtung kann modular aufgebaut sein, wobei ein Modul aus einem Trägersegment mit Motor, Sägeblatt und Regler besteht. Entsprechend der Tragfähigkeit des jeweiligen Helikopters kann die Anzahl der miteinander vorzugsweise durch Verschrauben verbindbaren Module frei gewählt werden.

Bei der erfindungsgemäßen Säge wird die bekannte und bewährte Anordnung der Sägeblätter und auch das Torsionsrohr beibehalten. Durch die Verwendung moderner Elektromotoren ohne den im Stand der Technik nötigen Antriebsstrang ist es nun möglich, genügend Drehmoment zur Überwindung der Verklemmung einzusetzen bevor sich diese zerstörerisch auswirken kann.

Die Erfindung setzt zu diesem Zweck zunächst eine ausreichende Leistung der Elektromotoren sowie ein zum Schnittgeschwindigkeitsbereich der Sägeblätter passenden Drehzahlbereich der Motoren ein. Dabei erfolgt eine entsprechend der zu erwartenden radialen und axialen Belastung der Motorwelle geeignete Lagerung dieser Welle und die Bereitstellung elektrischer Energie in ausreichendem Umfang.

Die Entwicklung auf dem Gebiet der Elektromobilität hat dazu geführt, dass eine bis vor wenigen Jahren noch undenkbar breite Palette von Elektro-Motoren größter Leistungsdichte und Ausführungsvielfalt zur Verfügung steht. So kann ein verfügbarer Motor bei einem Gewicht von 17 Kg bis zu 70 KW im Sekundenbereich und 20 KW Dauerleistung abgeben. Dies kann ohne Getriebe im für die Sägeblätter günstigen Drehzahlbereich zwischen 1000 UPM und 3000 UPM realisiert werden. Wie bei Elektromotoren im Allgemeinen steht vorteilhaft das volle Drehmoment von der ersten Umdrehung an zur Verfügung.

Die Lagerung der Wellen orientiert sich bei diesen verfügbaren Motoren an den Anforderungen an die Radlager von Kraftfahrzeugen und ist somit für die erfindungsgemäßen Sägevorrichtungen mehr als ausreichend dimensioniert. Das Sägeblatt wird jeweils direkt auf die Welle des Motors montiert. Es ist natürlich auch möglich, Getriebe vorzusehen.
Ein bevorzugter Bestandteil des neuen Antriebskonzeptes ist ein Speichersystem für elektrische Energie. Dieses System kann aus Akkumulatoren, Kondensatoren, Schwungmassenspeichern oder einer Kombination aus diesen bestehen. Die auf dem Gebiet der Speichertechnologien festzustellenden Fortschritte in Bezug auf Energiedichte, Gewicht, Belastbarkeit und Zyklenfestigkeit wirken sich sehr vorteilhaft auf die Gestaltung des erfindungsgemäßen Antriebskonzeptes für Helikopter Sägen aus.
Die Auslegung des Speichers wird zweckmäßig so gewählt, dass einerseits die Entnahme mittlerer Leistung über kurze Zeiträume zur Durchtrennung der relativ selten vorkommenden dickeren Äste (Leitungstrassen werden regelmäßig freigeschnitten) möglich ist, andererseits werden die häufiger auftretenden Ansätze zur Verklemmung mit relativ großer Leistung über ultrakurze Zeiträume überwunden, bevor die Verklemmung zum wirklichen Problem wird. Die Abdeckung der Grundlast, also den Verbrauch resultierend aus der Bereitstellungsdrehzahl (verminderte Drehzahl ohne Sägevorgang) und kleiner Leistung zur Durchtrennung der überwiegend schwachen Äste und Zweige wird vom Bordnetz des Helikopters (Generator) bereitgestellt, aus dem heraus der Speicher ständig nachgeladen wird.
In Abhängigkeit der zur Verfügung stehenden elektrischen Leistung aus dem Bordnetz des jeweiligen Helikopters wird die aus dem Speicher entnommene Energiemenge durch permanente Einspeisung vollständig oder teilweise ergänzt. Reicht die Leistung des Bordnetzes nur für eine teilweise Ergänzung aus, so kann der Speicher nach Unterschreitung eines Schwellenwertes, vorzugsweise während der etwa alle 1 bis 1,5 Stunden anfallenden Betankung des Helikopters, gegen einen geladenen Speicher ausgetauscht werden.

Alternativ kann die Energie auch fremderzeugt bereitgestellt werden, z.B. durch eine mitgeführte Kombination aus Verbrennungsmotor und Generator. Hierfür kommen vorzugsweise leichte und dennoch leistungsstarke Aggregate in Frage, die zur Vergrößerung der Reichweite für Elektrofahrzeuge (Range Extender) entwickelt worden sind.

Das neue Antriebskonzept bietet erhebliche Vorteile auch in Hinblick auf Überwachung, Regelung, Steuerung und Datenauslesung /Analyse, die bei rein mechanischen Systemen nicht möglich sind. Die dazugehörenden Komponenten und vorteilhaften Anwendungen sind im Folgenden beschrieben.

In einer vorteilhaften Ausführungsform umfasst die Steuerung eine elektronische Steuereinheit (ECU - electronic control unit) mit Schnittstelle zur Programmierung und zur Auslesung von Daten. Die ECU kommuniziert über ein Bus System (CAN BUS) mit den Regelungen der Motoren (MOTOR CONTROLLER), 1 Stück je Motor. Außerdem ist ein Batterie-Management-System (BMS) vorgesehen und die ECU steht mit einem Anzeigebildschirm (DISPLAY) in Verbindung.

Die Sensorik der MOTOR CONTROLLER erfasst alle Betriebszustände. Die Vorgaben der programmierbaren ECU die vom CONTROLLER umgesetzt werden, umfassen u.a.:
- das maximal gewünschte Drehmoment an der Motorwelle für eine maximale Zeitspanne (wird errechnet aus Stromaufnahme und Drehzahl), hierdurch entfallen die nachteiligen Rutschkupplungen
- die Drehzahl, wobei voreingestellte Werte vom Piloten je nach beobachteter Aststärke übersteuert werden können
- Rampen (Beschleunigungsraten + und -).

Eine absichtlich herbeigeführte Reduktion der Drehzahl wird vorteilhaft zur Rekuperation genutzt.

Die Möglichkeit eindeutige Handlungsanweisungen (Algorithmen) zu programmieren wirkt sich in folgendem häufig vorkommenden Szenario besonders günstig für die Arbeit mit der Säge aus. Wenn ein definierter Drehzahlabfall an einem Motor stattfindet, geht die ECU von einer Verklemmung aus und reduziert die Drehzahl der übrigen Motoren entsprechend. Durch die Schwungmasse der Sägeblätter (typischerweise ca. 6 Kg je Stück) werden die Motoren angetrieben und gelangen in den Generatoren Modus. Hierbei wird eine erhebliche elektrische Leistung generiert, die dann dem Sägeblatt "in Not" zur Verfügung steht, um die Verklemmung zu überwinden.

Die Sensorik erfasst alle Betriebszustände. Bei entsprechenden Abweichungen von Parametern kreiert die ECU optisch hervorgehobene Warnungen auf dem Display. Akustische Warnungen können auf das Funksystem (INTERCOM) des Helikopters geschaltet werden.

Die Rotoren der Elektromotoren und noch mehr die Sägeblätter stellen mit ihren rotierenden Massen ein Kreiselsystem dar. Durch Steuereingaben des Piloten erzwingt der Helikopter Lageänderungen dieses Kreisels entgegen dessen Beharrungsvermögen. Dadurch entstehen Kreiselmomente. Die Lageänderung des Kreisels, also der Sägevorrichtung während des Sägevorganges, fördert das Verklemmen. Darüber hinaus entstehen durch die Lageänderungen Lasten auf den betroffenen Verbindungen zwischen Sägeträger und Torsionsrohr. Da man eher eine "steigende" bzw. "kletternde" Säge tolerieren kann als eine Säge, die den Helikopter tendenziell nach unten zieht, lassen sich gegenläufige Sägeblätter nicht ohne weiteres verwenden, um Kreiselwirkungen zu neutralisieren. Dies ist auch deswegen nachteilig, weil man recht häufig mit der rückwärts pendelnden Säge arbeitet. Bei gegenläufigen Sägeblättern gäbe es dann mindestens eine Trennstelle zwischen linksdrehenden und rechtsdrehenden Blättern, an der das Holz zwischen die Sägeblätter hineingezogen werden könnte, was ein Blockieren der Säge zur Folge hätte.

In einer Ausführungsform sieht die Erfindung daher vor, bei gleichlaufenden Sägeblättern ein vorzugsweise leichtes Schwungrad mit extrem hoher Drehzahl entgegen der Drehrichtung der Sägeblätter elektromotorisch anzutreiben, und damit die Kreiselwirkung vollständig oder zumindest teilweise zu kompensieren. Ein solches Schwungrad wird am oberen Ende der Sägevorrichtung montiert. Vor dem Einsatz der Säge wird das Schwungrad elektromotorisch beschleunigt und die Drehzahl dann konstant gehalten. Die Drehrichtung ist umgekehrt zu der der Sägeblätter.

Bei der vorliegenden neuartigen Säge kann dieses Schwungrad auch als Energiespeicher für die zumeist sehr kurzen Zeiträume mit sehr hoher Leistungsanforderung dienen. Indem das Schwungrad in einen Generatormodus umgeschaltet wird, kann die enthaltene Energie in Strom umgewandelt und genutzt werden.

Dies kann insbesondere auch in Kombination mit der Rekuperation erfolgen, so dass vorteilhaft zeitgleich mit dem Bremsen der nicht von Verklemmung bedrohten Sägeblätter eine Verminderung des Kompensationseffektes durch das Schwungrad erfolgt.

Besonders geeignet sind in der Formel 1 verwendete Schwungräder, bei denen der Kreisel auf Magnetlagern und in einem weitgehend evakuierten Gehäuse läuft. Der Vorteil dieser vergleichsweise kostenintensiven Schwungräder ist das geringe Gewicht, wobei die zur Kompensation erwünschte Kreiselwirkung in erster Linie durch eine hohe Drehzahl und nur in zweiter Linie durch das Gewicht bewirkt wird.

In einer alternativen Ausführungsform werden die Sägeblätter mit gegenläufiger Drehrichtung betrieben, wobei an den Stellen, wo auf der Rückseite der Sägevorrichtung Sägeblätter zusammenlaufen Schutzbügel vorgesehen sind, die ein Einziehen von Astwerk verhindern. Zweckmäßig werden jeweils eine Hälfte der Sägeblätter oben oder unten bzw. rechts oder links in eine Richtung und der Rest in die andere Richtung angetrieben, somit ist nur ein Schutzbügel nötig und es steht ein großer Bereich zur Verfügung, mit dem bei Bedarf im Rückwärtsflug stehen gebliebenes Astwerk nachgeschnitten werden kann.

Die Erfindung soll anhand der folgenden Figuren erläutert werden, ohne jedoch auf die speziell beschriebenen Ausführungsformen beschränkt zu sein. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Es zeigt:
Figur 1 eine Sägevorrichtung an einem Helikopter
Figur 2 die Sägevorrichtung von Figur 1
Figur 3 einen Ausschnitt der Sägevorrichtung
Figur 4 den Ausschnitt von Figur 3 von der anderen Seite
Figur 5 drei Module für eine modulare Sägevorrichtung
Figur 6 ein Schema der Steuerung.

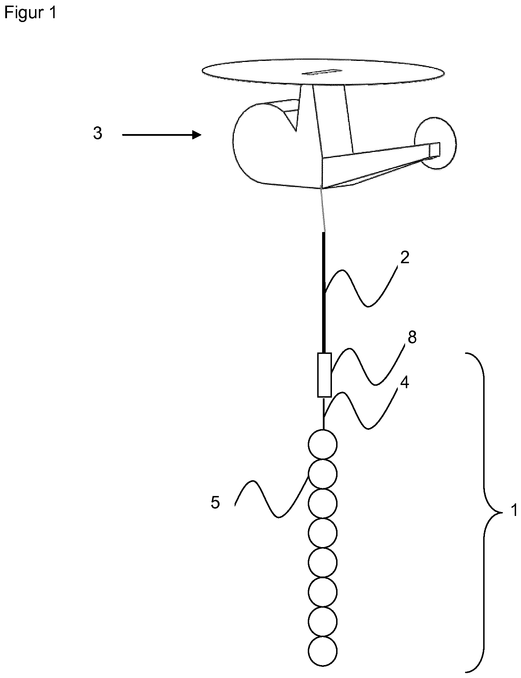

In Figur 1 ist eine Sägevorrichtung 1 zu sehen, welche über ein Torsionsrohr 2 an einem Helikopter 3 angehängt ist. Dies erfolgt in an sich bekannter Weise, indem eine geeignete Kupplung am Torsionsrohr 2 mit dem Lasthaken am Helikopter 3 verbunden wird. Die Sägevorrichtung wird von einem Träger 4 gebildet. Die gezeigte Sägevorrichtung verfügt über acht Sägeblätter 5, selbstverständlich können auch mehr oder weniger Sägeblätter vorhanden sein. Am oberen Ende der Sägevorrichtung 1 ist ein Energiespeicher 8 an dem Träger 4 montiert.

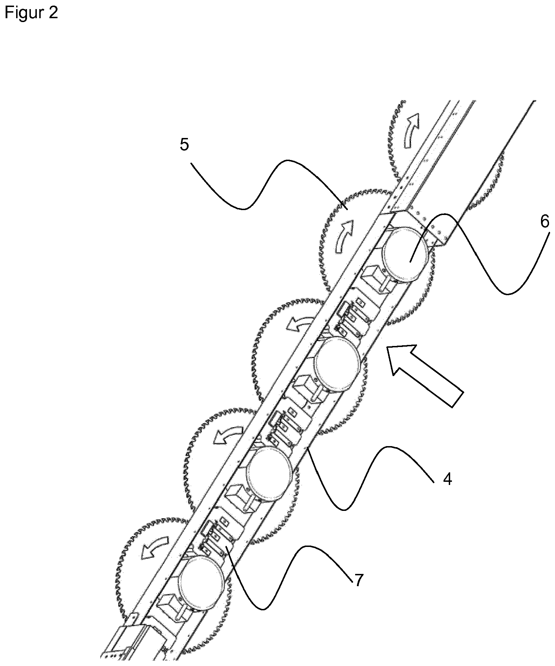

In Figur 2 ist die Sägevorrichtung 1 vergößert gezeigt, die Drehrichtung der Sägeblätter 5 ist mit einem Pfeil angedeutet. Weiter sieht man, dass jedes Sägeblatt 5 von jeweils einem Elektromotor 6 angetrieben wird. Jedem Motor 6 ist ein Regler 7 zugeordnet. Nicht dargestellte Leitungen verlaufen von den Reglern 7 zum Speicher 8 und zur Steuerung, die neben dem Speicher 8 oder im Helikopter 3 untergebracht sein kann.

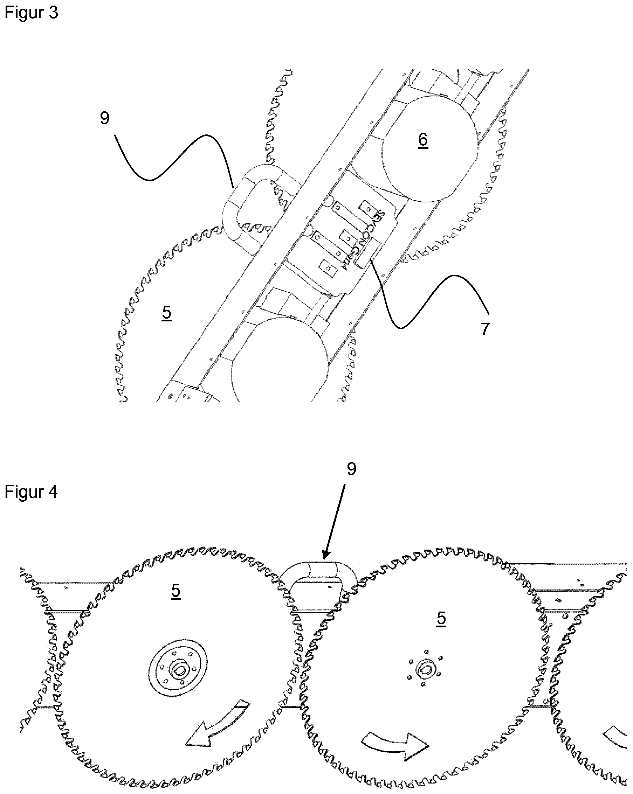

Die normale Flugrichtung des Helikopters in Figur 2 ist nach links oben. Im Rückwärtsflug könnte an der mit dem Pfeil gekennzeichneten Stelle, wo Sägeblätter mit unterschiedlicher Drehrichtung aneinander angrenzen, Astwerk in die Säge gezogen werden, was unmittelbar zum Verklemmen der Säge führen würde. Daher wird, wie in Figur 3 und 4 gezeigt, an dieser Stelle ein Schutzbügel 9 vorgesehen. Der Schutzbügel 9 wird also in Flugrichtung hinten angebracht.

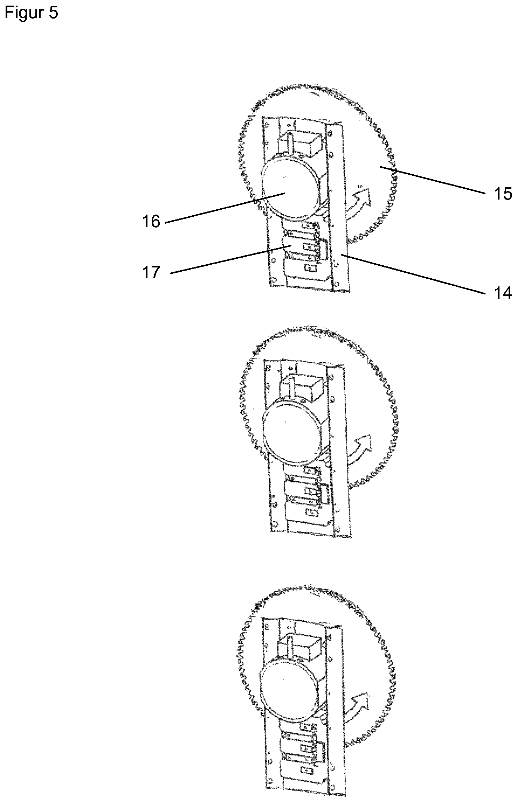

In Figur 5 sind drei Module 10 für eine modular aufgebaute Sägevorrichtung gezeigt. Jedes Modul 10 umfasst ein Trägersegment 14, an dem ein Elektromotor 16 und ein Regler 17 montiert sind. Das Sägeblatt 15 ist direkt an der Welle des Motors 16 angebracht. Je nach gewünschter Länge der Sägevorrichtung bzw. Tragkraft des Helikopters wird eine entsprechende Anzahl Module 10 miteinander verbunden. Typischwerweise werden die Trägersegmente 14 der Module 10 miteinander verschraubt. Neben den Trägersegmenten 14 werden auch die in der Figur nicht gezeigten Strom- und Datenleitungen verbunden, die zu diesem Zweck in der Regel Stecker aufweisen.

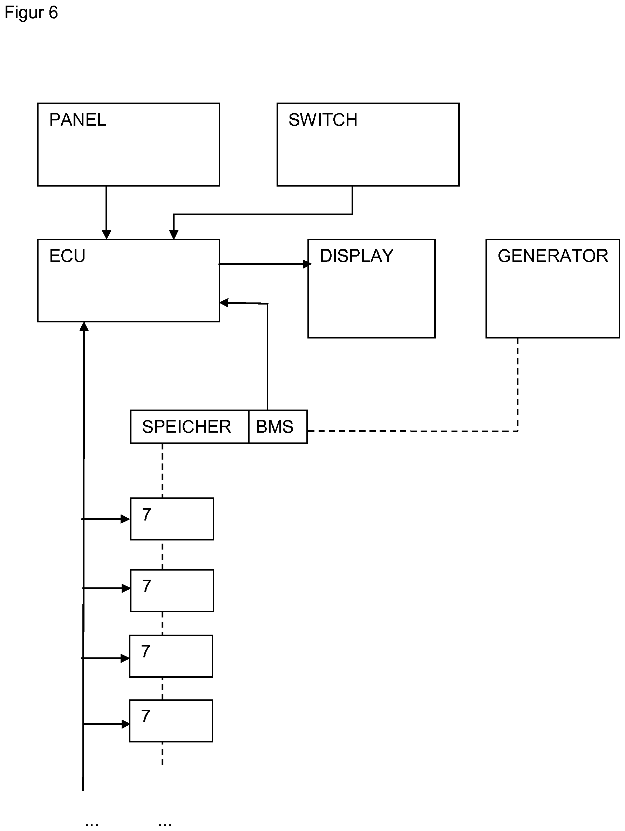

Figur 6 zeigt eine Schema der Steuerung für die Sägevorrichtung. Diese umfasst eine zentrale Steuerung ECU, welche zweckmäßig im Helikopter angeordnet wird. Über Datenleitungen (CAN-BUS, durchgezogene Linien) ist die Steuerung mit den Reglern 7 der Elektromotoren verbunden, so dass sowohl Steuerungsignale von der ECU an die Regler 7 als auch Messwerte über den Betriebszustand der Elektromoteren vom Regler 7 and die ECU übertragen werden können.

Weiter ist in der Regel eine Anzeigevorrichtung (DISPLAY) im Helikopter vorgesehen, welche mit der ECU verbunden ist. Die Anzeigevorrichtung visualisiert die von der ECU gesendeten Daten bzgl. des Betriebszustandes der Säge. Die ECU überwacht Parameter des Gesamtsystems und veranlasst das Display zur Darstellung von Warnmeldungen wenn sich Grenzwerte in vorher festgelegter Form einstellen.

Werden Schwellenwerte in vorher programmierter Weise erreicht bzw. überschritten verhindert die ECU über die Regler 7 z.B. durch Strombegrenzung bzw. sogar Abschaltung Schäden an dere Säge.

Im Betrieb erhält die ECU Befehle vom PANEL bzw. SWITCH, wie z.B. Ein- oder Ausschalten, Antreiben der Sägeblätter ein/aus, Drehzahl und Notaus.

Am Panel wird die für den zu erwartenden Schwierigkeitsgrad der Sägearbeit (Aststärken, Menge der Äste und Zweige je Strecke) Drehzahl voreingestellt so dass die ECU nach dem Signal "SÄGEN EIN", welches vom Piloten mit Hilfe des SWITCH gegeben wird, die Säge von der Breitstellungsdrehzahl auf den gewünschten Wert hoch beschleunigen kann. Bei erneuter Betätigung des SWITCH wird wieder auf die Bereitstellungsdrehzahl reduziert.

Die Stromversorgung der Elektromotoren erfolgt im gezeigten Beispiel durch einen Generator (kann auch der Antriebsgenerator des Helikopters sein), welcher Akkumulatoren als Energiespeicher (SPEICHER) lädt. Die korrekte Aufladung der Akkumulatoren regelt das Battery Managment System (BMS), welches auch Informationen z.B. über den Ladezustand an die ECU übermitteln kann. Die Stromleitungen sind mit gestrichelten Linien dargestellt. Die Leitungen zur Bereitstellung der Versorgungsspannung für ECU, DISPLAY etc. sind der besseren Übersichtlichkeit halber nicht dargestellt.

### Bezugszeichenliste

- 1: Sägevorrichtung
- 2: Torsionsrohr(e)
- 3: Helikopter
- 4: Träger
- 5: Sägeblatt
- 6: Elektromotor
- 7: Regler
- 8: Energiespeicher
- 9: Schutzbügel
- 10: Modul

- 14: Trägersegment
- 15: Sägeblatt
- 16: Elektromotor
- 17: Regler

## Patentansprüche

1. Verfahren zum Freischneiden mit einer von einem Helikopter getragenen Sägevorrichtung umfassend mindestens zwei Sägeblätter (5) an einem vertikalen oder horizontalen Träger (4), der unter Verwendung eines Torsionsrohres an den Helikopter (3) angekoppelt ist,
**dadurch gekennzeichnet,**
**dass** jedes Sägeblatt (5) von einem eigenen Elektromotor (6) angetrieben wird und jedem Elektromotor (6) ein Regler (7) zugeordnet ist, welcher mit einer Steuerung verbunden ist, welche die Drehzahl und das Drehmoment jedes Elektromotors (6) mittels des zugeordneten Reglers (7) steuert.

2. Verfahren gemäß Anspruch 1, **dadurch gekennzeichnet, dass** ein Speichersystem für elektrische Energie, vorzugsweise aus Akkumulatoren, Kondensatoren, Schwungmassenspeichern oder einer Kombination aus diesen, als Bestandteil des Antriebskonzeptes verwendet wird, wobei das Speichersystem durch Einspeisung aus dem Bordnetz des Helikopters zumindest teilweise nachgeladen wird.

3. Verfahren gemäß Anspruch 2, **dadurch gekennzeichnet, dass** elektrische Energie, die beim Verringern der Drehzahl eines Motors durch die den Motor antreibende Schwungmasse des Sägeblattes generiert wird, zur Auffüllung des Speichersystems genutzt wird.

4. Verfahren gemäß einem der Ansprüche 1 bis 3, **dadurch gekennzeichnet,**
**dass** die Sägeblätter (5) gleichlaufend angetrieben werden und zur Kompensation der Kreiselwirkung der Sägeblätter (5) ein elektrisch angetriebener, gegenläufiger Kreisel verwendet wird.

5. Verfahren gemäß einem der Ansprüche 1 bis 3, **dadurch gekennzeichnet,**
**dass** die Sägeblätter (5) gegenläufig angetrieben werden, wobei an den Stellen, wo zwei Sägeblätter (5) mit gegenläufiger Drehrichtung über- bzw. nebeneinander angeordnet sind, auf der Rückseite Schutzbügel (9) vorgesehen sind, die ein Einziehen von Astwerk verhindern.

6. Verfahren gemäß einem der Ansprüche 1 bis 5, **dadurch gekennzeichnet,**
**dass** die Sägevorrichtung (1) modular aufgebaut ist, wobei ein Modul (10) aus einem Trägersegment (14) mit Motor (16), Sägeblatt (15) und Regler (17) besteht, und die Anzahl der Module entsprechend der Tragfähigkeit des jeweiligen Helikopters gewählt wird.

7. Sägevorrichtung (1), die unter einem Helikopter hängend zum Freischneiden gemäß einem der Ansprüche 1 bis 6 verwendbar ist, umfassend mindestens zwei Sägeblätter (5) an einem vertikalen oder horizontalen Träger (4), der unter Verwendung eines Torsionsrohrs (2) an einen Helikopter (3) ankoppelbar ist,
**dadurch gekennzeichnet,**
**dass** jedes Sägeblatt (5) von einem eigenen Elektromotor (6) angetrieben wird und direkt oder über ein Getriebe auf der Welle des Elektromotors montiert ist und jedem Elektromotor (6) ein Regler (7) zugeordnet ist, welcher mit einer Steuerung verbunden ist, welche die Drehzahl und das Drehmoment jedes Elektromotors (6) mittels des zugeordneten Reglers (7) steuert.

8. Sägevorrichtung (1) gemäß Anspruch 7, **dadurch gekennzeichnet, dass** ein Speicher (8) für elektrische Energie, vorzugsweise ein Akkumulator oder Kondensator oder eine Kombination von beiden, vorgesehen ist.

9. Sägevorrichtung (1) gemäß Anspruch 7 oder 8, **dadurch gekennzeichnet,**
**dass** die Sägeblätter (5) gleichlaufend angetrieben werden und zur Kompensation der Kreiselwirkung der Sägeblätter (5) ein elektrisch angetriebener, gegenläufiger Kreisel vorhanden ist.

10. Sägevorrichtung (1) gemäß gemäß Anspruch 7 oder 8, **dadurch gekennzeichnet, dass** die Sägeblätter (5) gegenläufig angetrieben werden, wobei an den Stellen, wo zwei Sägeblätter (5) mit gegenläufiger Drehrichtung über- bzw. nebeneinander angeordnet sind, auf der Rückseite Schutzbügel (9) vorgesehen sind.

11. Sägevorrichtung (1) gemäß einem der Ansprüche 7 bis 10, **dadurch gekennzeichnet, dass** die Sägevorrichtung (1) modular aufgebaut ist, wobei ein Modul (10) aus einem Trägersegment (14) mit Motor (16), Sägeblatt (15) und Regler (17) besteht.

## Claims

1. Method for clearance cutting with a helicopter-borne sawing device comprising at least two saw blades (5) on a vertical or horizontal support (4) coupled to the helicopter (3) using a torque tube,
**characterized, in that** each saw blade (5) is driven by its own electric motor (6) and each electric motor (6) is associated with a controller (7) which is connected to a control system which controls the speed and torque of each electric motor (6) by means of the associated controller (7).

2. Method according to claim 1, **characterized in that** a storage system for electrical energy, preferably from accumulators, capacitors, flywheel energy storage or a combination thereof, is used as part of the drive concept, wherein the storage system is at least partially reloaded by power feed from the on-board power supply of the helicopter.

3. Method according to claim 2, **characterized in that** electrical energy which is generated by the flywheel of the saw blade driving the motor when reducing the rotational speed of a motor is used to refill the storage system.

4. Method according to any one of claims 1 to 3, **characterized in that** the saw blades (5) are driven unidirectionally and an electrically driven counter-rotating gyroscope is used to compensate for the centrifugal effect of the saw blades (5).

5. Method according to any one of claims 1 to 3, **characterized in that** the saw blades (5) are driven counter-rotating, wherein at the points where two saw blades (5) with opposite direction of rotation above or next to each other are arranged, guard brackets (9) are provided on the back which prevent branches being drawn in.

6. Method according to any one of claims 1 to 5, **characterized in that** the sawing device (1) is built modular, wherein a module (10) consists of a carrier segment (14) with motor (16), saw blade (15) and controller (17), and the number of modules is selected according to the carrying capacity of the respective helicopter.

7. Sawing device (1) usable for clearance cutting according to any one of claims 1 to 6 suspended below a helicopter, comprising at least two saw blades (5) on a vertical or horizontal support (4) coupled to a helicopter (3) using a torque tube (2), **characterized in that** each saw blade (5) is driven by its own electric motor (6) and is mounted directly or via a gear on the shaft of the electric motor, and a controller (7) is associated with each electric motor (6) which is connected to a control system which controls the speed and the torque of each electric motor (6) by means of the associated controller (7).

8. Sawing device (1) according to claim 7, **characterized in that** a storage (8) for electrical energy, preferably an accumulator or capacitor or a combination of both, is provided.

9. Sawing device (1) according to claim 7 or 8, **characterized in that** the saw blades (5) are driven unidirectionally and an electrically driven, counter-rotating gyroscope is present to compensate for the centrifugal effect of the saw blades (5).

10. Sawing device (1) according to claim 7 or 8, **characterized in that** the saw blades (5) are driven counter-rotating, wherein at the points where two saw blades (5) with opposite direction of rotation above or next to each other are arranged, guard brackets (9) are provided on the back.

11. Sawing device (1) according to one of claims 7 to 10, **characterized in that** the sawing device (1) is built modular, wherein a module (10) consists of a carrier segment (14) with motor (16), saw blade (15), and controller (17).

## Revendications

1. Procédé pour le dégagement par découpe avec un dispositif de sciage supporté par un hélicoptère, comprenant au moins deux lames de scie (5) contre un support vertical ou horizontal (4) qui est couplé à l'hélicoptère (3) en utilisant un tube de torsion, **caractérisé en ce que** chaque lame de scie (5) est entraînée par un moteur électrique propre (6) et à chaque moteur électrique (6) est attribué un contrôleur (7) qui est relié à une commande qui commande la vitesse de rotation et le couple de rotation de chaque moteur électrique (6) au moyen du contrôleur attribué (7).

2. Procédé selon la revendication 1, **caractérisé en ce qu'**un système de stockage pour de l'énergie électrique, de préférence constitué par des accumulateurs, des condensateurs, des mémoires de la masse d'inertie ou par une de leurs combinaisons, est utilisé à titre de constituant du mode de propulsion; dans lequel le système de stockage est rechargé au moins en partie par alimentation à partir du réseau de bord de l'hélicoptère.

3. Procédé selon la revendication 2, **caractérisé en ce qu'**on utilise de l'énergie électrique qui est générée lors de la réduction de la vitesse de rotation d'un moteur via la masse d'inertie de la lame de scie entraînant le moteur, pour la réalimentation du système de stockage.

4. Procédé selon l'une quelconque des revendications 1 à 3, **caractérisé en ce que** les lames de scie (5) sont entraînées de manière synchrone et un gyroscope contrarotatif entraîné par voie électrique est utilisé pour la compensation de l'effet gyroscopique des lames de scies (5).

5. Procédé selon l'une quelconque des revendications 1 à 3, **caractérisé en ce que** les lames de scie (5) sont entraînées de manière contrarotative; dans lequel, aux endroits où deux lames de scies (5) sont disposées, avec des sens de rotation opposés, l'une par-dessus l'autre, respectivement l'une à côté de l'autre, des arceaux de protection (9) sont prévus sur le côté arrière, qui empêchent l'entrée de branchages.

6. Procédé selon l'une quelconque des revendications 1 à 5, **caractérisé en ce que** le dispositif de sciage (1) est conçu de manière modulaire; dans lequel un module (10) est constitué par un segment de support (14) comprenant un moteur (16), une lame de scie (15) et un contrôleur (17), et le nombre des modules est sélectionné en fonction de la capacité portante de l'hélicoptère respectif.

7. Dispositif de sciage (1) que l'on peut utiliser à l'état suspendu en dessous d'un hélicoptère pour le dégagement par découpe selon l'une quelconque des revendications 1 à 6, comprenant au moins deux lames de scie (5) contre un support vertical ou horizontal (4) qui peut venir s'accoupler à un hélicoptère (3) en utilisant un tube de torsion (2), **caractérisé en ce que** chaque lame de scie (5) est entraînée par un moteur électrique propre (6) et est montée de manière directe ou via une transmission sur l'arbre du moteur électrique et, à chaque moteur électrique (6), est attribué un contrôleur (7) qui est relié à une commande qui commande la vitesse de rotation et le couple de rotation de chaque moteur électrique (6) au moyen du contrôleur attribué (7).

8. Dispositif de sciage (1) selon la revendication 7, **caractérisé en ce qu'**on prévoit une mémoire (8) pour de l'énergie électrique, de préférence un accumulateur ou un condensateur ou une combinaison des deux.

9. Dispositif de sciage (1) selon la revendication 7 ou 8, **caractérisé en ce que** les lames de scie (5) sont entraînées de manière synchrone et un gyroscope contrarotatif entraîné par voie électrique est présent à des fins de compensation de l'effet gyroscopique des lames de scies (5).

10. Dispositif de sciage (1) selon la revendication 7 ou 8, **caractérisé en ce que** les lames de scie (5) sont entraînées de manière contrarotative; dans lequel, aux endroits où deux lames de scies (5) sont disposées, avec des sens de rotation opposés, l'une par-dessus l'autre, respectivement l'une à côté de l'autre, avec des sens de rotation opposés, des arceaux de protection (9) sont prévus sur le côté arrière.

11. Dispositif de sciage (1) selon l'une quelconque des revendications 7 à 10, **caractérisé en ce que** le dispositif de sciage (1) est conçu de manière modulaire; dans lequel un module (10) est constitué par un segment de support (14) comprenant un moteur (16), une lame de scie (15) et un contrôleur (17).
